# EUROPEAN PATENT APPLICATION

(11) **EP 0 747 165 A1**
(43) Date of publication of application: **11.12.1996**
(21) Application number: 96109001.6
(22) Date of filing: 05.06.1996
(51) Int. Cl.: B23Q 1/01, B27M 1/08

(54) **A multitrack machine tool for working panels**

(30) Priority: 07.06.1995 IT BO950283
(71) Applicant: BIESSE S.p.A., 61100 Pesaro (IT)
(72) Inventor: Selci, Giancarlo, 61100 Pesaro (IT); Masetti, Goffredo, 61100 Pesaro (IT)
(74) Representative: Jorio, Paolo

(57) **Abstract**

A multitrack machine tool (1) includes a working surface (3) with a first longitudinal axis (X) and two tracks (4) parallel to the first axis for moving the panels (2) towards a work zone; a carriage (12) being movable by means of a device (13) along the first axis; and a work station (14) carried by the carriage and movable along a second axis (Y) perpendicular to the first axis. The main characteristic of the machine lies in the fact that it includes a device (15) for moving the work station along the second axis so as to move it from one track to the other, a device (5), for each track, for moving a panel along a first track towards the work zone while the work station is working on a panel on a second track, and a device (19) formed in the work surface for guiding the movement of the carriage (12).

## Description

The present invention relates to a multitrack machine tool for working panels.

It is known that machines of the above type include a work surface divided into several tracks for transporting panels, a carriage movable along the longitudinal axis of the work surface, means for guiding the carriage and work stations carried by the carriage. Machines of the aforesaid type are suited to the working of panels and normally have a length of up to four times their width.

In such machines, each work station is devoted exclusively to a corresponding track. Machines such as these are thus constituted by the combination of a plurality of single-track machines, each having its own work surface and work station. The disadvantages of these machines lie mainly in that such combinations of single-track machines do not result in any saving in the overall working times since, for each machine, the overall working time is the sum of the time taken for the work itself at the work station, the time taken to remove the panels, the time taken to load the panels and the time taken to convey the panels to the work zone.

The object of the present invention is to provide a multitrack machine tool which is free of the above disadvantages, takes up little space and carries out a work cycle in less time than prior art machines.

According to the present invention, a multitrack machine tool for working panels is provided, which includes:
a work surface defining a first horizontal longitudinal axis and at least two horizontal tracks which are parallel to each other and to the first axis, the panels being conveyed along each of these tracks to a work zone;
at least one carriage movable along the first axis;
means for driving the carriage along the first axis; and
at least one work station carried by the carriage and movable along a second horizontal axis perpendicular to the first axis;
characterised in that it includes means for moving the work station along the second axis so as to transfer it from one track to the other, means, for each track, for moving a panel along a first track to the work zone during the phase in which the work station is working on a panel on a second track, and a device, provided on the work surface, for guiding the movement of the carriage.

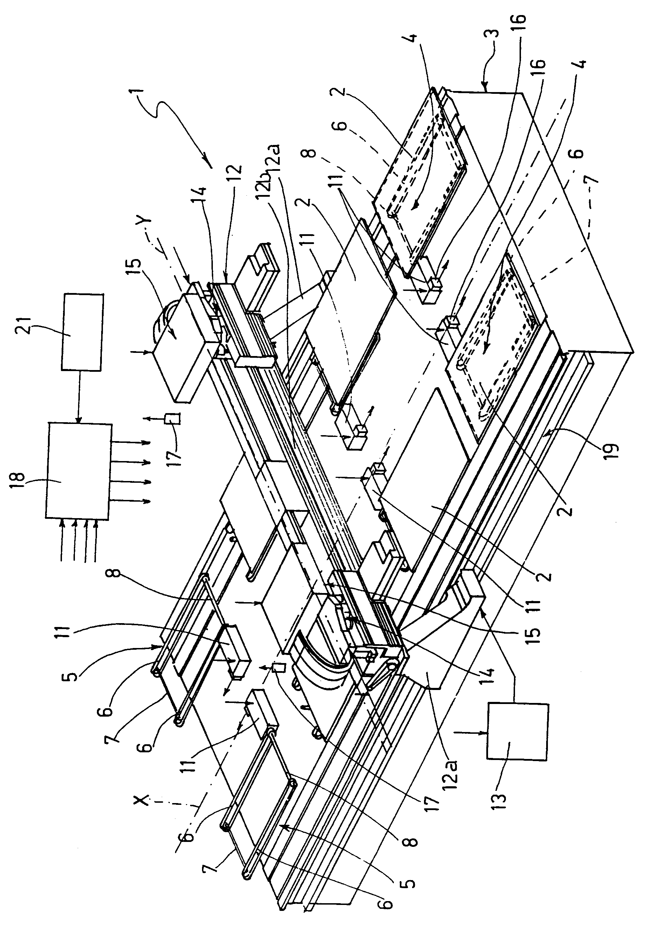

To provide a better understanding of the present invention, a preferred embodiment will now be described, purely by way of non-limitative example, with reference to the appended drawing, which is a schematic perspective view of a multitrack machine tool according to the present invention, generally indicated 1. The machine 1 is particularly suited to the working of panels 2 having a greater length than their width.

The machine 1 includes a work surface 3 defining a longitudinal horizontal axis X and having two horizontal tracks 4 parallel to each other and to the axis X. Panels 2 are conveyed along each track 4 with their longitudinal axes parallel to the axis X. Each track 4 has a plurality of drive devices 5 arranged in line and uniformly spaced along the longitudinal axis of the track 4. Each device 5 includes two continuous conveyor belts 6 passing at one end over a driven shaft 7 and at the other end over a drive shaft 8; an electric motor 11 is operable to rotate the drive shaft 8, the shafts 7 and 8 being arranged with their respective axes horizontal and perpendicular to the axis X.

The machine 1 also includes a carriage 12 movable along the axis X, drive means 13 for driving the carriage 12, two work stations 14 carried by the carriage 12 and movable along a horizontal axis Y perpendicular to the axis X, drive means 15 for moving the stations 14 along the axis Y, sensors 16 (preferably encoders) for monitoring the rotation of the motors 11 and, hence, the positions of the panels 2 on each track 4 along the axis X, sensors 17 for monitoring the positions of the stations 14 along the axis Y, and an electronic control unit 18 for managing the machine 1. The control unit 18 controls, in particular, the motors 11, the drive means 13 and 15 and the stations 14. The sensors 16 and 17 are also connected to the control unit 18. The drive means 13 and 15 and the sensors 16 and 17 are illustrated schematically since they are of a known type and, in particular, are fitted in the single-track machines manufactured by the Applicant. In this embodiment, the carriage 12 is shaped like an inverted 'U' and therefore has two opposite bodies 12a outside the work surface 3 and a beam 12b carried on the upper ends of the bodies 12a and supporting the stations 14. A device 19 for guiding the movement of the carriage 12 along the axis X is located between the sides of the work surface 3 parallel to the axis X and the bodies 12a.

In use, operations to be carried out on the panels 2 are programmed into the control unit 18, track by track, by means of a keyboard 21. In addition to the type of work, and therefore the tools which the work stations 14 must use, data relating to the dimensions of the panels 2 and the coordinates of the areas of the panels on which the working is to carried out are entered in the control unit 18. Once the panels 2 have been loaded onto the tracks 4, either manually or by means of an automatic device, the control unit 18 operates the devices 5 which move the panels 2 on each track 4 so as to move them from the loading zone to a working zone of the track 4. The unit 18 then controls the stations 14 which first carry out the programmed operations on a panel 2 on a first track 4 and then the programmed operations on a panel 2 on the second track 4. While these latter operations are being carried out, the unit 18 controls the devices 5 of the first track 4 to convey a second panel 2 towards the working zone and thus, while the stations 14 are working on a panel 2 on the first track 4, the control unit 18 controls the devices 5 of the second track 4 to move a panel 2 into the work zone. In order to carry out the working operations and to move from one track 4 to the other, the stations 14 must be moved along the axis Y by the drive means 15, controlled by the unit 18. In addition, should work be required on several parts of a panel 2, the unit 18 controls the movement of the carriage 12 and/or the means 5 for moving the panel 2 along the axis X.

The advantages provided by the present invention are clear from the above description.

In particular, apart from the first operating cycle on a track 4, in which work is carried out on the first panel 2, in all subsequent operating cycles, on either track, the time required to move a panel 2 into the work zone is not added into the overall time of working on the panel 2. In fact, the overall working time will be the sum of the actual working time and of the time taken to move the station 14 from one track 4 to the other; given the restricted dimensions of the tracks 4, this transfer time is much shorter than that required to move a panel 2 from the loading zone to the working zone. It is therefore clear that the machine 1 has substantially shorter working cycles, with all the consequent advantages such as the ability to work a greater number of panels 2 in a given period of time and therefore a lower overall cost for the working. Finally, the compact size of the machine 1 should also be mentioned.

Finally, it is clear that modifications and variations may be made to the machine 1 described and illustrated here without thereby departing from the protective scope of the present invention.

In particular, the carriage 12 may be of a different shape from that illustrated, while the principle of it being guided by the work surface 3 is retained.

## Claims

1. A multitrack machine tool for working panels (2) including:
a work surface (3) defining a first horizontal longitudinal axis (X) and at least two horizontal tracks (4) parallel to each other and to the first axis (X), panels (2) being conveyed along each track (4) to a work zone;
at least one carriage (12) movable along the first axis (12);
means (13) for driving the carriage (12) along the first axis (12), and
at least one work station (14) carried by the carriage (12) and movable along a second horizontal axis (y) perpendicular to the first axis (X);
characterised in that it includes means (15) for moving the work station (14) along the second axis (Y) so as to transfer it from one track to the other, means (5), for each track (4), for moving a panel (2) along a first track (4) to the work zone, while the work station (14) is working on a panel (2) on a second track (4), and a device (19) provided on the work surface (3) for guiding the movement of the carriage (12).

2. A machine according to Claim 1, characterised in that it includes, for each track (4), means (16) for monitoring the positions of the panels (2) along the tracks (4).

3. A machine according to Claim 2, characterised in that it includes means (17) for monitoring the position of the station (14) along the second axis (Y).

4. A machine according to the preceding Claims, characterised in that it includes an electronic control unit (18) for controlling the means (13) for moving the carriage (12, the work station (14), the means (15) for moving the station (14), and the means (5) for moving the panels (2) to the work zone; the means (16) for monitoring the positions of the panels (2) along the tracks (4) and the means (17) for monitoring the position of the station (14) along the second axis (Y) being connected to the control unit (18).

5. A machine according to any one of the preceding Claims, characterised in that the lengths of the panels (2) are greater than their widths and the panels (2) are arranged on the tracks (4) with their longitudinal axes parallel to the first axis (X).
